Europäisches Patentamt

(19) European Patent Office

Office européen des brevets

(11) Veröffentlichungsnummer : **0 198 794**
**B1**

(12) **EUROPÄISCHE PATENTSCHRIFT**

(45) Veröffentlichungstag der Patentschrift :
17.05.89

(21) Anmeldenummer : 86810134.6

(22) Anmeldetag : 21.03.86

(51) Int. Cl.⁴ : **H 01 J 29/89, H 04 N  1/46**

(54) **Kathodenstrahlröhre.**

(30) Priorität : 27.03.85 CH 1340/85

(43) Veröffentlichungstag der Anmeldung :
22.10.86 Patentblatt 86/43

(45) Bekanntmachung des Hinweises auf die Patenterteilung : 17.05.89 Patentblatt 89/20

(84) Benannte Vertragsstaaten :
BE CH DE FR GB IT LI NL

(56) Entgegenhaltungen :
DE—A— 1 487 188
FR—A— 2 358 016
GB—A—  977 927
JP—A—55 066 843
JP—A—58 120 240
US—A— 4 309 720
PATENTS ABSTRACTS OF JAPAN, Band 7, Nr. 231 (P-
229)[1376], 13. Oktober 1983; & JP - A - 58 120 240
PATENTS ABSTRACTS OF JAPAN, Band 4, Nr. 109 (E-
20)[591], 6. August 1980, Seite 83 E 20; & JP - A - 55 66
843

(73) Patentinhaber : CIBA-GEIGY AG
Klybeckstrasse 141
CH-4002 Basel (CH)

(72) Erfinder : Meyer, Armin, Dr.
Route de Lossy
CH-1782 Belfaux (CH)

# Beschreibung

Die Erfindung betrifft eine Kathodenstrahlröhren-Kamera nach dem Oberbegriff des Patentanspruchs 1. Eine derartige Kathodenstrahlröhren-Kamera ist aus der JP-A-58 120 240 bekannt.

Bekanntlich kann man mit einer einfachen Kamera einen farbigen Televisionsschirm oder einen Monitor photographieren, das Resultat erfüllt jedoch aus verschiedenen Gründen nur sehr bescheidene Ansprüche : Die Anzahl der Linien pro Bildhöhe erlaubt nur eine niedrige Bildschärfe, die Schattenmaske, die die einzelnen Bildelemente für Blau, Grün und Rot voneinander abgrenzt, wird mitabgebildet und der gewölbte Bildschirm bedingt geometrische Verzerrungen. Man hat deshalb spezielle Kameras konstruiert, die mit einer relativ kleinen Bildröhre (Diagonale des Bildes ca. 12-23 cm = 5-9 inch) ausgerüstet sind. Diese Bildröhren erzeugen das Bild auf einer ebenen Frontplatte, deshalb können geometrische Verzerrungen vermieden werden. Das Bild wird durch eine Optik auf das lichtempfindliche Material übertragen. Die Bildröhre enthält auf der Innenseite der Frontplatte eine Phosphorschicht, die blaues, grünes und rotes Licht emittiert, es wird also ein unbuntes Bild geschrieben. Im Strahlengang kann nacheinander ein blaues, grünes oder rotes Filter eingeschwenkt werden. Der Elektronenstrahl der Bildröhre wird z. B. zuerst mit dem Blausignal moduliert und das Bild durch das Blaufilter belichtet, danach mit dem Grünsignal, kombiniert mit dem Grünfilter und schliesslich folgt in analoger Weise die Rotbelichtung. Diese Technik vermeidet die Nachteile der Schattenmaske. Die Bildschärfe kann gegenüber der Farbtelevision auch wesentlich verbessert werden, denn es sind Bildröhren erhältlich, die bis 4'000 Zeilen pro Bildhöhe auflösen.

Mit derartigen CRT-Kameras (CRT = Cathode Ray Tube) lassen sich zwar je nach Aufwand sehr gute Bilder erzeugen, aber es ergibt sich ein gravierender Nachteil : Die bescheidene Lichtausbeute des optischen Systems, kombiniert mit der sequentiellen Belichtung der drei Grundfarben, führt zu langen Belichtungszeiten. Bei 1'000 Zeilen pro Bildhöhe sind für Material der Empfindlichkeit von 80-100 ISO z. B. etwa 30-60 Sekunden Belichtungszeit notwendig. Verwendet man Bildröhren mit höherer Auflösung, z. B. 4'000 Zeilen, so ist die Belichtungszeit noch wesentlich länger, denn die Bildelemente weisen dann eine z. B. 16 mal kleinere Fläche auf, was einen niedrigeren Strahlstrom bedingt.

Um die Belichtungszeit zu verkürzen, kann man Phosphore mit verstärkter Rotemission verwenden, denn die Belichtungszeit für Rot ist die längste. Dafür wurden z. B. Europium-dotierte Phosphore eingesetzt. Man kann auch die Anodenspannung der Bildröhre erhöhen, aber ab etwa 20 kV werden Röntgenstrahlen erzeugt, die nicht ohne weiteres zulässig sind.

Eine weitere Methode zur Verkürzung der Belichtungszeit ist die Verwendung von farbphotographischem Material mit höherer Empfindlichkeit. Derartige Materialien sind nur als Kamerafilm erhältlich, ihr Auflösungsvermögen ist niedriger und die Körnigkeit höher als bei Materialien mit niedriger Empfindlichkeit. Diese Nachteile schränken die Anwendung ein. Deshalb werden Materialien mit niedriger Empfindlichkeit, aber besonders rascher und einfacher photochemischer Verarbeitung vorgezogen.

Dafür sind CRT-Kameras entwickelt worden, die es erlauben, das Photomaterial im Kontakt mit der Frontplatte der Bildröhre zu belichten. Die abbildende Optik entfällt und damit wird das Gerät wesentlich kleiner. Um eine gute Bildschärfe zu erhalten, ist jedoch eine wesentliche Aenderung erforderlich : Die Frontplatte der Bildröhre besteht aus einer Vielzahl von sehr dünnen Lichtleitfasern, die das Licht von der Phosphorschicht, die sich im Hochvakuum befindet, auf geradem Wege nach aussen auf die photographische Schicht leiten. Die Lichtleitfasern sind miteinander zu einer kompakten, luftdichten Platte verschmolzen. Die Fasern haben deshalb einen sechseckigen Querschnitt, Dicke etwa 7 Mikron, und bestehen aus einem Kern und einem Mantel. Die einzelnen Fasern sind somit mindestens 7 mal dünner als die Grösse von relevanten Bildstrukturen in einem Bild von 20 × 25 cm. Kern und Mantel werden aus Gläsern mit verschiedenem Brechungsindex gefertigt. Der Kern hat einen höheren Brechungsindex als der relativ dünne Mantel. Das Licht wird durch Totalreflexion am Mantel geleitet. Um Streulicht und Licht mit grossem Einfallswinkel (bezogen auf die Senkrechte zur Oberfläche) zu absorbieren, werden typisch 3 % der Fasern aus schwarzem Glas gefertigt. Der Querschnitt der schwarzen Fasern und der Mantelquerschnitte (ca. 9,5 %) bedingt einen Lichtverlust von ca. 12,5 %.

CRT-Kameras mit Faseroptik-Frontplatten werden für die Belichtung von monochromen Photomaterialien hergestellt. Dabei wird auf der langen und schmalen Frontplatte jeweils am selben Ort nacheinander Zeile um Zeile geschrieben. Da das Photomaterial in geeigneter Weise quer zu dieser Zeile bewegt wird, erscheinen nach der photographischen Verarbeitung die Zeilen nebeneinander und fügen sich zu einem ganzen Bild zusammen. Dank der viel höheren Lichtausbeute im Vergleich zu konventionellen CRT-Kameras lassen sich Bilder von z. B. 20 × 25 cm selbst auf niedrig empfindlichem Photomaterial in typisch etwa 2-4 Sekunden aufzeichnen.

Farbtaugliche Faseroptik-CRT-Kameras sind jedoch bisher nicht erhältlich. Es wurde schon vorgeschlagen, auf der Innenseite der Frontplatte nebeneinander 3 Streifen mit verschiedenen Phosphoren zu belegen, je einen für die Emission von blauem, grünem und rotem Licht : US-Patent 4,309,720. Der Elektronenstrahl schreibt nacheinander eine Linie, z. B. erst blau, dann grün und danach rot. Dies bedingt lediglich eine Vertikalablenkung des Strahles in der Art, dass der Strahl für jede Farbline von einem Phosphorstreifen auf den anderen springt. Es ist auch möglich, eine CRT mit 3 Elektronenstrahlquellen, für jede Grundfarbe eine, zu verwenden, wie dies in Farbtelevisionsröhren üblich ist (« triple gun »).

Bei dieser Technik, unabhängig davon, ob man eine Einstrahl- oder Dreistrahlröhre verwendet, muss das Signal mit der Bewegung des Photomaterials synchronisiert werden, das heisst, die zusammengehörigen Blau-, Grün- und Rotsignale müssen nacheinander geschrieben werden. Es muss also z. B. das Grünsignal später geschrieben werden als das Blausignal, und das Rotsignal später als das Grünsignal. Dies ist heute elektronisch ohne Probleme möglich.

Die Verwendung von drei Phosphorstreifen, je einen für die Farben Blau, Grün und Rot, ist jedoch nicht ohne Probleme. Gegenüber einer Röhre mit nur einem Phosphor ist die Herstellung schwieriger, und zudem weisen viele Phosphore Emissionsspektren auf, die nicht genügend monochromatisch sind. Ein hauptsächlich rot emittierender Phosphor kann z. B. auch schwache Emissionen im Grün- oder Blaubereich aufweisen. Dies beeinflusst die Farbtrennung und damit die Farbwiedergabe in ungünstiger Weise. Angaben über die Wahl von Phosphoren wurden im U.S. Pat. 4,459,512 gemacht.

Durch die vorliegende Erfindung sollen nun die genannten Nachteile von Kathodenstrahlröhren-Kameras mit mehreren Phosphorstreifen beseitigt werden. Insbesondere soll durch die Erfindung eine lichtstarke, farbtaugliche Kathodenstrahlröhren-Kamera geschaffen werden, die eine bessere Farbtrennung und damit bessere Farbwiedergabe ermöglicht.

Die erfindungsgemässe Kathodenstrahlröhren-Kamera ist im Patentanspruch 1 beschrieben. Bevorzugte Ausführungsformen und Weiterbildungen ergeben sich aus den abhängigen Ansprüchen.

Im folgenden wird ein Ausführungsbeispiel einer erfindungsgemässen Kathodenstrahlröhren-Kamera anhand der Zeichnung näher erläutert. Die beiden Zeichnungsfiguren zeigen eine schematische Darstellung der erfindungsrelevanten Teile der Kamera in zwei verschiedenen Schnittansichten.

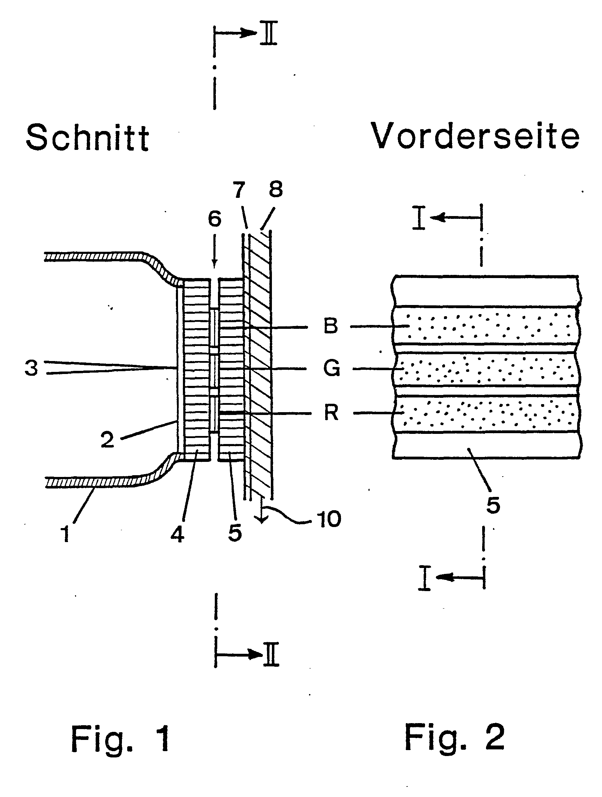

Die dargestellte Kamera umfasst eine Kathodenstrahlröhre 1 mit einer Faseroptik-Frontplatte 4, deren Innenseite mit einer Phosphorschicht 2 belegt ist. Vor der Frontplatte 4 ist eine zweite Faseroptik-Platte 5 angeordnet, die mit der Frontplatte 4 über eine Immersionsöhl-Schicht 6 in optischem Kontakt steht. Zwischen den beiden Faseroptik-Platten 4 und 5 sind drei schmale Farbfilterstreifen B, G und R angeordnet, welche sich parallel zu den vom Elektronenstrahl 3 erzeugten Leuchtlinien (in Fig. 1 senkrecht zur Zeichenebene) erstrecken. Diese Farbfilterstreifen sind vorzugsweise als dichroitische Filter ausgebildet und auf die zweite Faseroptik-Platte 5 aufgedampft.

Unmittelbar an der äusseren Seite der zweiten Faseroptik-Platte 5 anliegend oder in geringem Abstand zu dieser befindet sich ein aus Träger 8 und lichtempfindlicher Beschichtung 7 bestehendes fotoempfindliches Material. Es wird über an sich bekannte und darum hier nur durch den Pfeil 10 symbolisch angedeutete Mittel, wie einleitend erläutert, in Richtung quer zu den Leuchtlinien an der zweiten Faseroptik-Platte 5 entlang bzw. vorbei bewegt und dabei zeilenweise belichtet.

Um Lichtverluste und Unschärfen des Bildes zu vermeiden, müssen die Filterstreifen sehr dünn (~ 10 Mikron) und ausserdem sehr lichtbeständig sein. Dichroitische Filter erfüllen diese Bedingungen im allgemeinen besser als Absorptionsfilter, jedoch können für gewisse Anwendungen eventuell auch Absorptionsfilter eingesetzt werden.

Wie schon erwähnt, kann zwischen dem photographischen Material und der zweiten Faseroptik-Platte 5 ein geringer Abstand vorgesehen sein. Dieser kann z. B. 10-100 Mikron, vorzugsweise etwa 30-60 Mikron betragen. Auf diese Weise können Kratzer und Schmutzablagerungen vermieden werden.

Als photographisches Trägermaterial 8 kommen die üblichen Schichtträger wie Papier oder Film in Frage, wie sie beispielsweise in Research Disclosure, Nr. 17 643, Abschnitt XVII A bis G, Dezember 1978, beschrieben sind.

Die photosensitive Beschichtung 7 ist auf die spektralen Durchlassbereiche der Farbfilterstreifen abgestimmt. Dasselbe gilt natürlich auch für die Phosphorschicht 2 in der Kathodenstrahlröhre 1, die ein so breites Sprektrum emittieren muss, dass sämtliche durch die Farbfilterstreifen festgelegten Spektralbereiche überdeckt sind. Geeignete Phosphore sind in der Literatur beschrieben.

Ueblicherweise sind die Farbfilterstreifen für die Farben Rot, Blau und Grün durchlässig. Es können jedoch auch andere Farbkombinationen gewählt werden, beispielsweise etwa Ultraviolett-Blau-Grün oder z. B. zwei sichtbare Bereiche und ein IR-Bereich oder dergleichen. Es können selbstverständlich auch mehr als drei Spektralbereiche vorgesehen sein, eventuell auch zusätzlich noch Weiss, falls eine unbunte Registrierung gewünscht wird. Ebenso kann mit sog. Falschfarbenfilmen gearbeitet werden. Ferner ist es auch möglich, dass auf dem Phosphor nicht ganze Zeilen geschrieben werden, sondern in rascher Folge z. B. ein kurzes Stück einer Zeile von jeder Farbe. Derartige und ähnliche Methoden sind beschrieben z. B. in US-PS 4 309 720.

Der Hauptunterschied der erfindungsgemässen farbtauglichen Kamera genenüber vergleichbaren herkömmlichen Kameras besteht also darin, dass sie nicht für jeden gewünschten Spektralbereich einen separaten Phosphor aufweist, sondern dass nur ein einziger, entsprechend breitbandiger Phosphor vorhanden ist und die Farben durch selektive Filterung erzeugt werden, wobei aber weiterhin mit Faseroptikplatten und nicht mit Abbildung via Objektiv gearbeitet wird. Die erfindungsgemässe Kamera ergibt gegenüber den mit Objektiv-Abbildung arbeitenden Kameras eine wesentlich höhere Lichtausbeute (~ Faktor 50) und gegenüber den farbtauglichen Faseroptikplatten-Typen eine wesentlich verbesserte Farbtrennung und damit höhere Bildqualität.

**Patentansprüche**

1. Kathodenstrahlröhren-Kamera mit einer Kathodenstrahlröhre (1) mit Faseroptik-Frontplatte (4), auf deren Innenseite sich eine ein breites Lichtspektrum emittierende Phosphorschicht (2) zur Erzeugung wenigstens einer Leuchtlinie befindet, wobei vor der Faseroptik-Frontplatte (4) eine zweite Faseroptikplatte (5) angeordnet ist und zwischen diesen beiden Faseroptikplatten (4, 5) wenigstens zwei parallele, sich in Richtung der Leuchtlinie erstreckende Farbfilterstreifen (B, G, R) unterschiedlicher spektraler Durchlässigkeit vorgesehen sind, dadurch gekennzeichnet, dass die Farbfilterstreifen (B, G, R) sehr dünne dichroitische Filter sind.

2. Kamera nach Anspruch 1, dadurch gekennzeichnet, dass Mittel (10) vorhanden sind, um ein im Durchlässigkeitsbereich der Farbfilterstreifen (B, G, R) sensitives photographisches Material (7, 8) in direktem Kontakt mit oder im Abstand von bis zu 100 Mikron von der zweiten Faseroptikplatte (5) an dieser in Richtung quer zur Leuchtlinie entlang zu führen.

3. Kamera nach Anspruch 2, dadurch gekennzeichnet, dass der Abstand etwa 10-100 Mikron, vorzugsweise etwa 30-60 Mikron beträgt.

4. Kamera nach einem der Ansprüche 1-3, dadurch gekennzeichnet, dass sich zwischen den beiden Faseroptikplatten (4, 5) Immersionsöl (6) befindet.

5. Kamera nach einem der Ansprüche 1-4, dadurch gekennzeichnet, dass die dichroitischen Filter (G, B, R) auf die zweite Faseroptikplatte (5) aufgedampft sind.

6. Kamera nach einem der Ansprüche 1-5, dadurch gekennzeichnet, dass die Kathodenstrahlröhre (1) zur Erzeugung mehrere Leuchtlinien ausgebildet ist, von denen jede einen der Farbfilterstreifen (B, G, R) beaufschlagt, wobei die zeitlichen Abstände zwischen den Leuchtlinien bzw. Farbfilterstreifen so gewählt sind, dass auf dem photographischen Material ein Farbbild zustande kommt.

7. Kamera nach einem der Ansprüche 1-6, dadurch gekennzeichnet, dass Farbfilterstreifen für die Farben Blau, Grün und Rot vorgesehen sind.

8. Kamera nach einem der Ansprüche 1-6, dadurch gekennzeichnet, dass Farbfilterstreifen für zwei Bereiche im sichtbaren Spektralgebiet und einen Bereich im nahen Infrarot vorgesehen sind.

9. Kamera nach einem der Ansprüche 1-6, dadurch gekennzeichnet, dass Farbfilterstreifen für nahes Ultraviolett, Blau und Grün vorgesehen sind.

10. Kamera nach einem der Ansprüche 1-9, dadurch gekennzeichnet, dass Farbfilterstreifen für mehr als drei Spektralbereiche vorgesehen sind.

**Claims**

1. A cathode ray tube camera comprising a cathode ray tube (1) having an optical fibre front plate (4), on the inside of which is located a phosphor layer (2) which emits a broad optical spectrum to produce at least one luminous line, a second optical fibre plate (5) being arranged in front of the optical fibre front plate (4), and at least two parallel colour filter strips (B, G, R) of different spectral permeabilities and extending in the direction of the luminous line being provided between said two optical fibre plates (4, 5), characterised in that the colour filter strips (B, G, R) are very thin dichroic filters.

2. A camera according to Claim 1, characterised in that there are means (10) for moving a photographic material (7, 8), which is sensitive in the permeability range of said colour filter strips (B, G, R) and is in direct contact with or at a distance of up to 100 microns from the second optical fibre plate (5), along said plate in a direction transverse to the luminous line.

3. A camera according to Claim 2, characterised in that said distance is approximately 10-100 microns, preferably approximately 30-60 microns.

4. A camera according to one of Claims 1-3, characterised in that there is immersion oil (6) between said two optical fibre plates (4, 5).

5. A camera according to one of Claims 1-4, characterised in that said dichroic filters (G, B, R) are deposited on the second optical fibre plate (5).

6. A camera according to one of Claims 1-5, characterised in that said cathode ray tube (1) is designed to produce a plurality of luminous lines, each of which acts on one of the colour filter strips (B, G, R), the intervals of time between the luminous lines or colour filter strips being selected such that a colour image is produced on the photographic material.

7. A camera according to one of Claims 1-6, characterised in that colour filter strips are provided for the colours blue, green and red.

8. A camera according to one of Claims 1-6, characterised in that the colour filter strips are provided for two ranges in the visible spectrum and one range in the near infra-red spectrum.

9. A camera according to one of Claims 1-6, characterised in that colour filter strips are provided for near ultraviolet, blue and green.

10. A camera according to one of Claims 1-9, characterised in that colour filter strips are provided for more than three spectral ranges.

**Revendications**

1. Caméra à tube cathodique comprenant un tube cathodique (1) muni d'une plaque frontale à fibres optiques (4) sur le côté intérieur de laquelle se trouve une couche de phosphore (2) qui émet un large spectre lumineux et est destinée à produire au moins une ligne lumineuse, une deuxième plaque à fibres optiques (5) étant disposée devant la plaque frontale à fibres optiques (4) et au moins deux bandes-filtres de couleur (B, G, R) parallèles, s'étendant en direction de la ligne lumineuse et possédant des transmissions spectrales différentes, étant prévues entre ces deux plaques à fibres optiques (4, 5), caractérisée en ce que les bandes-filtres de couleur (B, G, R) sont des filtres dichroïques très minces.

2. Caméra selon la revendication 1, caractérisée en ce que des moyens (10) sont prévus pour guider un matériau photographique (7, 8) sensible dans la bande de transmission des bandes-filtres de couleur (B, G, R) transversalement à la ligne lumineuse, le long de la deuxième plaque à fibres optiques (5), en contact direct avec cette dernière ou à une distance pouvant aller jusqu'à 100 microns.

3. Caméra selon la revendication 2, caractérisée en ce que la distance est d'à peu près 10 à 100 microns, et de préférence d'à peu près 30 à 60 microns.

4. Caméra selon l'une des revendications 1 à 3, caractérisée en ce que de l'huile d'immersion (6) se trouve entre les deux plaques à fibres optiques (4, 5).

5. Caméra selon l'une des revendications 1 à 4, caractérisée en ce que les filtres dichroïques (G, B, R) sont déposés en phase vapeur sur la deuxième plaque à fibres optiques (5).

6. Caméra selon l'une des revendications 1 à 5, caractérisée en ce que le tube cathodique (1) est conçu pour produire plusieurs lignes lumineuses dont chacune agit sur l'une des bandes-filtres de couleur (B, G, R), les intervalles de temps entre les lignes lumineuses et les bandes-filtres de couleur étant choisis de telle sorte qu'une image en couleurs apparaisse sur le matériau photographique.

7. Caméra selon l'une des revendications 1 à 6, caractérisée en ce que des bandes-filtres de couleur sont prévues pour le bleu, le vert et le rouge.

8. Caméra selon l'une des revendications 1 à 6, caractérisée en ce que des bandes-filtres de couleur sont prévues pour deux zones dans le domaine spectral visible et pour une zone dans l'infrarouge proche.

9. Caméra selon l'une des revendications 1 à 6, caractérisée en ce que des bandes-filtres de couleur sont prévues pour l'ultraviolet proche, le bleu et le vert.

10. Caméra selon l'une des revendications 1 à 9, caractérisée en ce que des bandes-filtres de couleur sont prévues pour plus de trois domaines spectraux.

Schnitt

Vorderseite

Fig. 1

Fig. 2